# EUROPEAN PATENT SPECIFICATION

(11) **EP 1 051 524 B1**
(45) Date of publication and mention of the grant of the patent: **31.10.2001**
(21) Application number: 98903791.6
(22) Date of filing: 29.01.1998
(51) Int. Cl.: C21B 5/00

(54) **GAS SUPPLY OR MIXING SYSTEM FOR A BLAST FURNACE**
GASZUFÜHRUNGS- BZW. -MISCHSYSTEM FÜR EINEN HOCHOFEN
SYSTEME D'AMENER OU MELANGER GAZ POUR UN HAUT-FOURNEAU

(43) Date of publication of application: 15.11.2000
(73) Proprietor: AIR PRODUCTS AND CHEMICALS, INC., Allentown, PA 18195-1501 (US)
(72) Inventor: LIPUKIN, Yuri Victorovich, Cherepovets, 162606 (RU); KORNEV, Valentin Konstantinovich, Tula, 300040 (RU); KURUNOV, Ivan Filippovich, Moscow, 119620 (RU); DOBROSKOK, Vladislav Andreevich, Moscow, 117463 (RU); LOGINOV, Valeri Nikolayevich, Vologodski Region, Cherepovets, 162614 (RU)
(74) Representative: Schwabe - Sandmair - Marx
(86) International application number: US9801621
(87) International publication number: WO9939012

(56) References cited:
- GB-A- 2 018 299
- KORNEV V K ET AL: "ACCELERATION OF IRONMAKING BY INJECTION OF GAS-OXYGEN MIXTURE INTO BLAST FURNACE" STEEL IN THE USSR, vol. 21, no. 11, 1 November 1991, pages 488-490, XP000287542
- DATABASE WPI Section Ch, Week 8718 Derwent Publications Ltd., London, GB; Class M24, AN 87-128018 XP002079562 & SU 1 257 089 A (KOMM MINE-METAL INS) , 15 September 1986
- DATABASE WPI Section Ch, Week 8330 Derwent Publications Ltd., London, GB; Class M24, AN 83-721977 XP002079563 & SU 960 266 A (TULACHERMET ASSOC) , 23 September 1982
- DATABASE WPI Section Ch, Week 9512 Derwent Publications Ltd., London, GB; Class M24, AN 95-088271 XP002079564 & RU 2 015 168 C (EKONTEKH STOCK CO) , 30 June 1994

## Description

### BACKGROUND OF THE INVENTION

This invention relates to the field of ferrous metallurgy, specifically the blast-furnace process, and is applicable to feeding natural gas into blast furnaces.

In trying to reduce fuel consumption in a blast-furnace process by burning natural gas in a more efficient way, various gas regulation systems for blast furnaces have been developed.

One system was designed for regulation of the pressure and rate of natural gas injected into a blast furnace and for its distribution among the air tuyeres. That system consisted of: a natural gas supply pipe-line provided with a shutoff, safety, measuring and control instruments, a bypass line complete with gate valves and gas vent, and a circular manifold with connections for feeding gas to each air tuyere, the circular manifold provided with shutoff and safety devices. This gas regulation system suffers from a number of drawbacks. Among them are; lack of measuring and regulating devices in connecting pipes feeding natural gas to tuyeres, lack of devices preventing the formation of explosive mixtures in the gas regulation system, lack of a system for maintaining the prescribed ratio between the natural gas and blast air (or blast oxygen) flow rates, and lack of devices for preparation of natural gas for efficient combustion in the tuyere zone.

Another gas regulation system for use with a blast furnace, is the one consisting of the natural gas pipe-line with shutoff, safety, measuring and control instruments, a pipe-line, connected to the natural gas line and equipped with shutoff and control instruments, for purging and filling it with inert gas; a bypass line with shutoff and regulation instruments, and a distributing manifold with connections, equipped with shutoff, safety, measuring and regulating instruments, for feeding the gas to each air tuyere. This gas regulation system eliminates most of the drawbacks of the previous system but retains its main weakness, namely inability to prepare natural gas for efficient burning in a blast furnace which leads to excessive fuel usage in making pig iron.

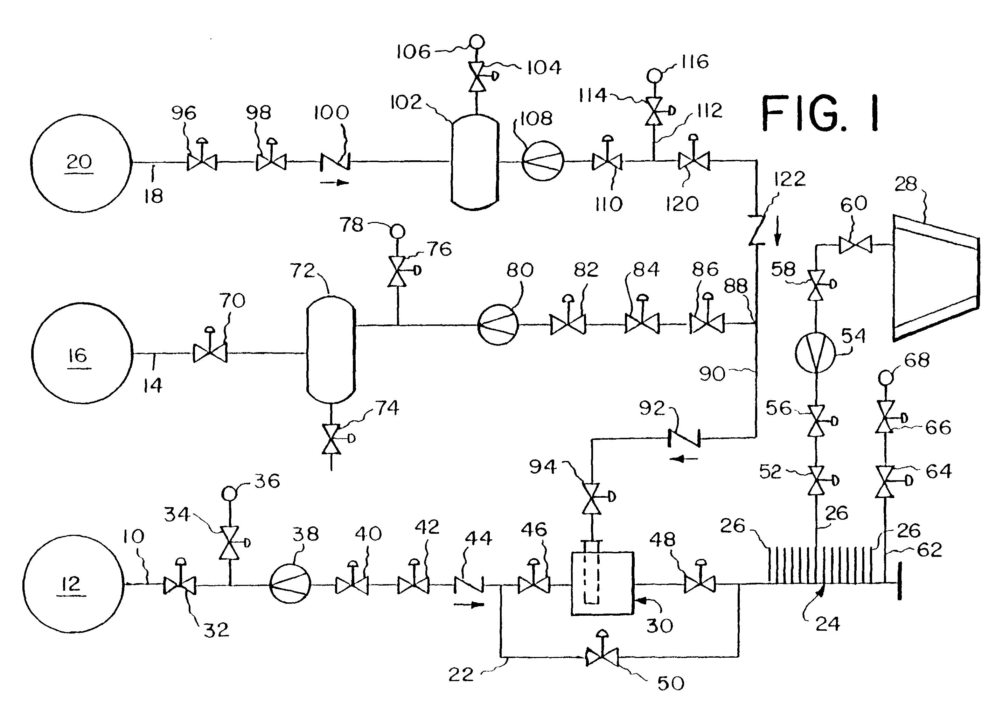

Steel in the USSR 21 (1991), Nov., No.11, London, pages 488-490, Fig. 1, discloses a blast furnace including tuyeres and a mixer fed by lines for supplying natural gas and oxygen, respectively. The mixer is connected with the tuyeres; each of said lines comprises at least one flow control valve, flow control means and check valve.

### BRIEF SUMMARY OF THE INVENTION

The goal of the invention is to improve the last described process above to reduce the rate of fuel usage rate in the blast-furnace process.

In order to achieve this goal the present invention includes a gas regulation system for a blast furnace consisting of natural gas and inert gas pipe-lines, a distributing manifold with gas supply lines to air tuyeres and a bypass pipe-line, as well as shutoff, safety, measuring and control instruments installed in those pipe-lines and a mixer in the natural gas pipe-line and an oxygen supply pipe connected to the mixer, with a by-pass pipe connected to the natural gas pipe-line before and after the mixer, and an inert gas pipe-line connected to the oxygen supply line.

Thus the present invention is a gas mixing apparatus comprising tuyeres of a blast furnace, which tuyeres are connected with a mixer; the apparatus further comprises a source of natural gas connected to said a mixer via a natural gas supply pipe or conduit, said pipe having, upstream of the mixer, a flow control valve to initiate, control and terminate flow of a natural gas to the mixer, flow control means between said the flow control valve and said mixer, with a check valve between said flow control means and said mixer, a source of oxygen connected to said mixer via an oxygen supply pipe or conduit, said pipe having, upstream of said mixer a flow control valve to initiate, control and terminate flow of oxygen to the mixer, flow control means followed by a check valve between said flow control valve and said mixer, means to introduce an inert gas into said mixer, and means to by-pass said mixer to deliver natural gas, without mixing with oxygen and/or inert gas, directly to the blast furnace tuyeres.

Dependent claims 2-12 mention optional features of the invention.

In a preferred embodiment of the invention the mixer is made in the form of a cylindrical chamber with a diameter to length ratio being in the range of 0.4 - 0.7. A perforated tube, connected to the oxygen supply pipe-line with one end closed, is inserted into the cylindrical chamber with the longitudinal axis of the tube perpendicular to the longitudinal axis of the cylinder, wherein diameter of the perforated tube is equal to 0.15 - 0.5x the diameter of the cylindrical chamber of the mixer. The total area of the holes in the perforated tube is in the range of 0.3 - 0.6x the flow area of the tube with the diameter of holes in the range of 0.03 - 0.07x the tube diameter.

### BRIEF DESCRIPTION OF THE SEVERAL VIEWS OF THE DRAWINGS

Figure 1 is a schematic representation of a gas regulation system according to the present invention.

Figure 2 is a schematic representation of a mixer according to the invention.

### DETAILED DESCRIPTION OF THE INVENTION

As shown in Figure 1 the gas regulation system includes: a natural gas pipe line or conduit 10 connected to a source of natural gas 12, an oxygen pipe-line or conduit 14 connected to a source of oxygen 16 and inert gas pipe-line or conduit 18 connected to a source of inert gas 20, a bypass line or conduit 22, a manifold 24 with delivery pipe-lines or conduits 26 for supplying the gas to blast furnace (air) tuyeres 28, and a mixer 30.

Pipe-lines 10, 14, and 18 are designed to feed natural gas, oxygen and inert gas, e.g. nitrogen, respectively into the mixer 30. The bypass pipe-line 22 serves to supply natural gas directly into the manifold 24 bypassing the mixer 30. Manifold 24 and delivery pipe-lines 26 are intended to supply natural gas or a natural gas/oxygen mixture to the blast furnace tuyeres 28. The mixer 30 is designed to obtain a homogeneous mixture of natural gas and oxygen.

Natural gas pipe-line, conduit or supply line 10 is equipped with a shut-off or control valve 32 to initiate or terminate the flow of natural gas from source 12, a bleeder control valve 34 leading to a bleeder valve or device 36 to vent natural gas or purge the system, an orifice plate 38, solenoid operated valve 40, regulating valve 42, check valve 44, mixer 30 and mixer isolation valves 46 and 48 together with mixer by-pass conduit 22 and mixer by-pass valve 50. Pipe-line 10 supplies natural gas to a manifold 24 which supplies pipe-lines (e.g. 26) which in turn supply the natural gas to the blast furnace tuyere(s) 28. Delivery pipe-line or conduit 26 includes natural gas flow control valve 52, flow plate 54 and flow plate isolation valves 56 and 58 and a check valve 60. Manifold 24 also includes a vent or recovery conduit 62 with a manual control valve 64 and solenoid operated control valve 66 leading to a bleeder valve or recovery or vent system 68.

Oxygen pipe-line, conduit or supply line 14 is equipped with a manual control valve 70, a dust collector or separator 72 with a clean out valve 74. Dust collector 72 serves to remove solid particulate material from the oxygen. The pipe-line 14 is fitted with a bleeder control valve 76 leading to a bleeder valve, recovery or vent system 78. Downstream of the system 78 is an orifice plate 80, regulating valve 82, solenoid operated control valve 84 and a shut-off valve 86 upstream of the location 88 where the nitrogen pipe-line 18 enters a common conduit 90 which is connected through a check valve 92 and control valve 94 to the mixer 30 as will hereinafter be more fully explained.

Nitrogen pipe-line, conduit or supply line 18 includes a cut-off valve 96 to initiate or terminate nitrogen flow through conduit 18, control valve 98 and check valve 100 leading to a surge tank 102. Inclusion of surge tank 102 is intended to enable the user to create an emergency reserve by accumulation of an excess amount of inert gas. Surge tank 102 can be bled or vented through a system including a control valve 104 leading to a recovery or vent 106. Downstream of surge tank 102 pipe-line 18 includes an orifice plate 108 a shut-off valve 110 a branch line or conduit 112 with a control valve 114 leading to a bleeder, vent or recovery system 116, a control valve 120 upstream of a check valve 122, in pipe-line 18 prior to its entry into the common conduit 90 at location 88.

Shut off devices, which include gate valves, solenoid-operated and manually operated valves, as well as regulating valves and cutoff valves, serve to shut off, or isolate from the gas regulation system, separate pipe-lines or sections of pipe-lines when gases supplied to the system are stopped, i.e., during repair and maintenance work and in emergency situations.

Safety devices which include check valves and bleeder valves are intended to a) automatically cut off oxygen supply to the mixer, b) to automatically switch on and continuously feed inert gas into the oxygen pipe-line and, c) cut off inert gas automatically with reduction of its pressure in the outer circuit in emergency situations, as well as, d) to bleed a certain amount of oxygen and inert gas from the system in case of excessive pressure.

Measuring instruments in addition to the orifice plates or flow meters can include pressure and temperature sensors, to measure; the flow rates of natural gas, oxygen, inert gas, natural gas/oxygen mixtures and blast air, the pressure of natural gas, oxygen, inert gas and blast air, and, the temperature of the natural gas/oxygen mixture. Instruments, not shown in Fig. 1, are intended to regulate oxygen pressure, natural gas pressure and flow rates of natural gas, oxygen and natural gas/oxygen mixtures. Such instrumentation is well known in the art.

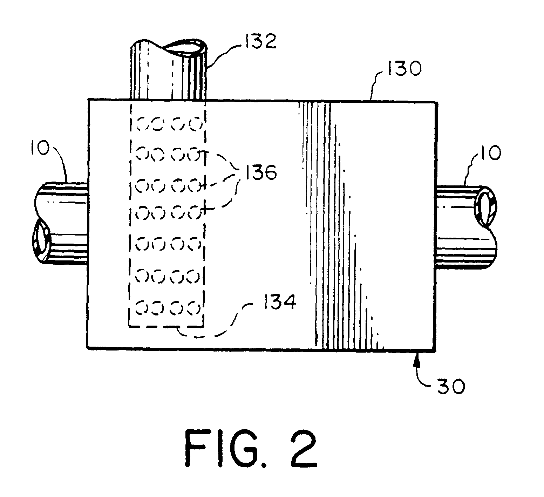

Referring to Figure 2 during the operation of the gas regulation system natural gas and oxygen are supplied into the mixer 30 through pipe-lines 10 and 14 at the pre-assigned pressure values and preset ratio of flow rates. A homogeneous natural gas/oxygen mixture formed in the mixer arrives at the manifold 24 and via delivery pipe-lines 26 is fed into tuyere(s) 28. The mixer 30 includes a cylindrical chamber portion 130 which is disposed in pipe-line or conduit 10 between valves 46 and 48 with the axis of rotation of the cylinder coincident with or parallel to the longitudinal axis of pipe-line 10. A tube 132 communicating with the common pipe-line 90 downstream of valve 94 is placed into the cylindrical portion 130 of mixer 30 generally perpendicular to the axis of rotation of the cylindrical chamber portion 130. The tube 132 has a closed end 134 and a plurality of perforations 136. The tube 132 is fixed in fluid tight relation to the cylindrical chamber portion 130 with all of the perforations 136 inside of the chamber 130.

Inert gas (e.g. nitrogen) via pipe-line (18) is mixed with or injected into the oxygen from pipe-line (14) in common conduit 90 during the start-up of the gas regulation system in order to prevent the formation of explosive mixtures.

The maximum homogeneity of the natural gas/oxygen mixture is provided at the following ratios;
- diameter of the mixer cylindrical chamber to its length 0.4 - 0.7
- diameter of perforated tube to diameter of cylindrical chamber 0.15 - 0.5
- diameter of holes in perforated tube to its diameter 0.03 - 0.07
- total area of holes in the tube to its flow section 0.3 - 0.6
which ratios were determined experimentals.

A system according to the invention was fabricated and installed in a blast furnace shop in Cherepovets in the Russian Federation. The system had a mixer fabricated as shown in Figure 2 with the following dimensions:
A. Cylindrical Chamber Portion (130)
   Inside Diameter 410mm (16.14 inches)
   Length 750mm (29.52 inches)
B. Tubes or Perforated Pipe (132)
   Inside Diameter 100mm (3.93 inches)
   Total Cross-sectional Area of Holes or Perforations-
      3532mm² (5.48 sq. inches)
   Number of holes or perforation 180
   Diameter of each hole or perforation 5mm (0.20 inches)

The mixing chamber was operated to provide a homogeneous mixture of 20% oxygen, balance natural gas when the oxygen flow to the perforated pipe was 52Nm³ (1940.6 std ft³)/minute and natural gas flow was 208Nm³ (7762.6 std ft³)/minute.

When natural gas arrives at the tuyeres in the form of a uniform mixture with oxygen, the process of burning of natural gas accelerates which provides for its complete combustion in the tuyere zone, increases coke replacement ratio and decreases coke and total fuel consumption during blast furnace operation.

## Claims

1. A gas mixing apparatus comprising blast furnace tuyeres (28) connected with
a mixer (30), the apparatus further comprising
a source of natural gas (12) connected to said mixer (30), via a natural gas supply pipe or conduit (10), said pipe (10) having, upstream of said mixer (30), a flow control valve (32) to initiate, control and terminate flow of natural gas to said mixer (30), flow control means (40, 42) between said flow control valve (32) and said mixer (30), with a check valve (44) between said flow control means (40, 42) and said mixer (30);
a source of oxygen (16) connected to said mixer (30) via an oxygen supply pipe or conduit (14), said pipe having, upstream of said mixer (30), a flow control valve (70) to initiate, control and terminate flow of oxygen to said mixer, flow control means (82, 84, 86) followed by a check valve (92) between said flow control valve (70) and said mixer (30);
**characterized by**
means to introduce an inert gas (20) into said mixer (30); and
means (22, 50) to by-pass said mixer (30) to deliver natural gas (12) without mixing with oxygen and/or inert gas directly to said blast furnace tuyeres (28).

2. Gas mixing apparatus according to claim 1, wherein a dust collector means (22) is included in said oxygen supply pipe between said flow control valve and said flow control means.

3. Gas mixing apparatus according to claim 1, wherein said means to introduce inert gas into said mixer (30) includes a source of inert gas (20) connected to an inert gas pipe or supply conduit (18), a flow control valve (96) to initiate or terminate inert gas flow in said inert gas pipe (18), a surge tank (102) between said flow control valve (96) and a common pipe or conduit (90) leading to said mixer (30) connected to said oxygen and inert gas pipes (14, 18) upstream of said mixer (30), and flow control means (110 120) between said surge tank (102) and said common pipe (90) with a check valve (122) between said flow control means (110, 120) and said common pipe (90).

4. Gas mixing apparatus according to claim 1, wherein said mixer (30) is a cylindrical chamber (130) connected to said natural gas supply pipe (10) downstream of said check valve (44), with a tube (132) having a first or supply end connected to said oxygen supply conduit (14) downstream of said check valve (92), and a second or closed end (134) with said tube having a plurality of perforations (136) through a portion of its length, said perforations (136) proximate said closed end (134) of said tube (132), said tube (132) inserted into said cylindrical chamber (130) with the axis of rotation of said tube disposed perpendicular to the axis of rotation of said cylinder, and said tube (132) in fluid tight communication with said cylindrical chamber (130), said perforations (136) in said tube (132) being entirely within said cylindrical chamber (130).

5. Gas mixing apparatus according to claim 4, wherein the diameter to length ratio of the cylindrical chamber (130) is equal to 0.4 - 0.7.

6. Gas mixing apparatus according to claim 4, wherein diameter of the perforated tube (132) is equal to 0.15 to 0.5x the diameter of cylindrical chamber of the mixer.

7. Gas mixing apparatus according to claim 4, wherein the total area of perforations (136) in the perforated tube (132) is in the range of 0.3 to 0.6x the total flow area of the tube (136).

8. Gas mixing apparatus according to claim 4, wherein the diameter of each hole (136) in the perforated tube (132) is in the range of 0.03 and 0.07x the diameter of the tube.

9. Gas mixing apparatus according to claim 1 including means (34, 36) to purge said natural gas conduit (10) upstream of said flow control means (40,42).

10. Gas mixing apparatus according to claim 4 including means (76, 78) to purge said oxygen conduit (14) between a dust collector (72) placed downstream of said flow control valve (70) and said flow control means (82,84,86).

11. Gas mixing apparatus to claim 1, wherein said means to introduce an inert gas into said oxygen supply conduit (14) includes a source of inert gas (20) connected to said oxygen supply conduit (14) via an inert gas pipe or conduit (18), said pipe (18) having upstream of the common oxygen and inert gas supply conduit (90) a flow control valve (96) to initiate, control and terminate flow of inert gas to said oxygen supply conduit, a surge tank (102) downstream of said control valve (96) between a first check valve (100) and a flow control means (108), a second control valve (120) between said flow control valve (96) and said common oxygen and inert gas conduit (90), and a second check valve (122) between said second control valve (120) and said common oxygen and inert gas conduit (90).

12. Gas mixing apparatus according to claim 9 including a first means (104, 106) to purge said surge tank (102) and a second means to purge said inert gas conduit (18) between said second control valve (120) and said second check valve (122).

## Patentansprüche

1. Gasmischvorrichtung mit Blashochofen-Windformen (28), die mit einer Mischeinrichtung (30) verbunden sind, wobei die Vorrichtung weiterhin aufweist
eine Quelle für Natur- bzw. Erdgas (12), die mit der Mischeinrichtung (30) über ein Erdgas-Zuführrohr oder eine -Zuführleitung (10) verbunden ist, wobei das Rohr (10), in Strömungsrichtung gesehen vor der Mischeinrichtung (30), ein Strömungs-Steuer- bzw. Regel-Ventil (32) zur Einleitung, Steuerung bzw. Regelung und Beendigung der Strömung des Erdgases zu der Mischeinrichtung (30), eine Strömungs-Steuer- bzw. Regel-Anordnung (40, 42) zwischen dem Strömungs-Regel-Ventil (32) und der Mischeinrichtung (30) mit einem Rückschlagventil (44) zwischen der Strömungs-Regel-Anordnung (40, 42) und der Mischeinrichtung (30) hat;
eine Sauerstoff-Quelle (16), die mit der Mischeinrichtung (30) über ein Sauerstoff-Zuführ-Rohr oder eine -Zuführ-Leitung (14) verbunden ist, wobei das Rohr, in Strömungsrichtung gesehen vor der Mischeinrichtung (30), ein Strömungsregel- bzw. Steuer-Ventil (70) zur Einleitung, Regelung bzw. Steuerung und Beendigung der Strömung des Sauerstoffs zu der Mischeinrichtung und eine Strömungs-Regel- bzw. Steuer-Anordnung (82, 84, 86), gefolgt von einem Rückschlagventil (92) zwischen dem Strömungs-Regel-Ventil (70) und der Mischeinrichtung (30) hat,
**gekennzeichnet durch** eine Anordnung zur Einführung eines Inertgases (20) in die Mischeinrichtung (30); und
eine Anordnung (22, 50) zur Umgehung der Mischeinrichtung (30), um Erd- bzw. Naturgas (12) ohne Mischen mit dem Stickstoff und/oder dem Erdgas direkt den Blashochofen-Windformen (28) zuzuführen.

2. Gasmischvorrichtung nach Anspruch 1, wobei eine Staubsammelanordnung (22) in dem Sauerstoff-Zuführ-Rohr zwischen dem Strömungs-Regel-Ventil und der Strömungs-Regel-Anordnung enthalten ist.

3. Gasmischvorrichtung nach Anspruch 1, wobei die Anordnung zur Einführung des Inertgases in die Mischeinrichtung (30) eine Quelle für Inertgas (20), die mit einem Inertgas-Rohr oder einer -Zuführleitung (18) verbunden ist, ein Strömungs-Regel- bzw. Steuer-Ventil (96) für die Einleitung oder Beendigung der Inertgas-Strömung in dem Inertgas-Rohr (18), einen Druckausgleichbehälter (120) zwischen dem Strömungs-Regel- bzw. Steuer-Ventil (96) und ein gemeinsames Rohr oder eine gemeinsame Leitung (19), die zu der Mischeinrichtung (30) führt, die mit den Sauerstoff- und Inertgas-Rohren (14, 18) in Strömungsrichtung gesehen vor der Mischeinrichtung (13) verbunden ist, und eine Strömungs-Regel- bzw. Steuer-Anordnung (110, 120) zwischen dem Druckausgleichbehälter (20) und dem gemeinsamen Rohr (19) mit einem Rückschlagventil (122) zwischen der Strömungs-Regel- bzw. Steuer-Anordnung (110, 120) und dem gemeinsamen Rohr (19) enthält.

4. Gasmischvorrichtung nach Anspruch 1, wobei die Mischeinrichtung (30) eine zylindrische Kammer (130), die in Strömungsrichtung gesehen hinter dem Rückschlagventil (44) mit dem Erdgas-Zuführrohr (10) verbunden ist, mit einem Rohr (132) mit einem ersten oder Zuführende, das mit der Sauerstoff-Zuführleitung (14) in Strömungsrichtung gesehen hinter dem Rückschlagventil (92) verbunden ist, und mit einem zweiten oder geschlossenen Ende (134) ist, wobei das Rohr eine Vielzahl von Perforationen (136) über einen Teil seiner Länge hat und die Perforationen (136) in der Nähe des geschlossenen Endes (134) des Rohrs (132) sind, wobei das Rohr (132) so in die zylindrische Kammer (130) eingesetzt ist, dass die Drehachse des Rohrs senkrecht zu der Drehachse des Zylinders angeordnet ist und das Rohr (132) in fluiddichter Verbindung mit der zylindrischen Kammer (130) steht, und wobei sich die Perforationen (136) in dem Rohr (132) vollständig in der zylindrischen Kammer (130) befinden.

5. Gasmischvorrichtung nach Anspruch 4, wobei das Verhältnis-Durchmesser zu Länge der zylindrischen Kammer (130) gleich 0,4-0,7 ist.

6. Gasmischvorrichtung nach Anspruch 4, wobei der Durchmesser des perforierten Rohrs (132) gleich 0,15 bis 0,5 x Durchmesser der zylindrischen Kammer der Mischeinrichtung ist.

7. Gasmischvorrichtung nach Anspruch 4, wobei die Gesamtfläche der Perforationen (196) in dem perforierten Rohr (132) in dem Bereich von 0,3 bis 0,6 x Gesamtströmungsfläche des Rohrs (136) ist.

8. Gasmischvorrichtung nach. Anspruch 4, wobei der Durchmesser jedes Lochs (136) in dem perforierten Rohr (132) im Bereich von 0,03 und 0,07 x Durchmesser des Rohrs ist.

9. Gasmischvorrichtung nach Anspruch 1 mit einer Anordnung (34, 36) zum Reinigen bzw. Spülen der Erdgas-Leitung (10) in Strömungsrichtung gesehen vor der Strömungs-Regel- bzw. Steuer-Anordnung (40, 42).

10. Gasmischvorrichtung nach Anspruch 4 mit einer Anordnung (76, 78) zur Reinigung bzw. Spülung der Sauerstoff-Leitung (14) zwischen einem Staubsammler (72), der in Strömungsrichtung gesehen hinter dem Strömungs--Regel- bzw. Steuer-Ventil (70) angeordnet ist, und der Strömungsregel- bzw. Steueranordung (82, 84, 86).

11. Gasmischvorrichtung nach Anspruch 1, wobei die Anordnung zur Einführung eines Inertgases in die Sauerstoff-Zuführleitung (14) eine Quelle für Inertgas (20) enthält, die mit der Sauerstoff-Zuführleitung (14) über ein Inertgas-Rohr oder eine - Leitung (18) verbunden ist, wobei das Rohr (18) in Strömungsrichtung gesehen vor der gemeinsamen Sauerstoff- und Inertgas-Zuführleitung (90) ein Strömungs-Regel- bzw. Steuerventil (96) zur Einleitung, Regelung bzw. Steuerung und Beendigung der Strömung des Inertgases zu der Sauerstoff-Zuführleitung, einen Druckausgleichbehälter (102) in Strömungsrichtung gesehen hinter dem Steuer- bzw. Regelventil (96) zwischen einem ersten Rückschlagventil (100) und einer Strömungs-Regel- bzw. Steueranordnung (108), ein zweites Steuer- bzw. Regel-Ventil (120) zwischen dem Strömungs-Regel- bzw. Steuer-Ventil (96) und der gemeinsamen Sauerstoff- und Inertgas-Leitung (90) und ein zweites Rückschlagventil (122) zwischen dem zweiten Steuer- bzw. Regel-Ventil (120) und der gemeinsamen Sauerstoff- und Inertgas-Leitung (90) hat.

12. Gasmischvorrichtung nach Anspruch 9 mit einer ersten Anordnung (104, 106) zur Spülung bzw. Reinigung des Druckausgleichbehälters (102) und in einer zweiten Anordnung zur Spülung bzw. Reinigung der Inertgas-Leitung (18) zwischen dem zweiten Regel- bzw. Steuer-Ventil (120) und dem zweiten Rückschlagventil (122).

## Revendications

1. Appareil de mélange de gaz comprenant des tuyères de haut fourneau (28) connectées à
un mélangeur (30), l'appareil comprenant en outre
une source de gaz naturel (12) connectée audit mélangeur (30), via une tuyauterie ou conduite d'alimentation en gaz naturel (10), ladite tuyauterie (10) ayant, en amont dudit mélangeur (30), une vanne de régulation de débit (32) afin d'initier, de réguler ou de couper un débit de gaz naturel vers ledit mélangeur (30), des moyens de régulation de débit (40, 42) entre ladite vanne de régulation de débit (32) et ledit mélangeur (30), avec un clapet antiretour (44) entre lesdits moyens de régulation de débit (40, 42) et ledit mélangeur (30); une source d'oxygène (16) connectée audit mélangeur (30), via une tuyauterie ou conduite d'alimentation en oxygène (14), ladite tuyauterie ayant, en amont dudit mélangeur (30), une vanne de régulation de débit (70) afin d'initier, de réguler ou de couper un débit d'oxygène vers ledit mélangeur, des moyens de régulation de débit (82, 84, 86) suivis d'un clapet antiretour (92) entre ladite vanne de régulation de débit (70) et ledit mélangeur (30);
**caractérisé par**
des moyens pour introduire un gaz inerte (20) dans ledit mélangeur (30); et
des moyens (22, 50) pour contourner ledit mélangeur (30) afin de fournir du gaz naturel (12) directement auxdites tuyères (28) du haut fourneau sans le mélanger à l'oxygène et/ou au gaz inerte.

2. Appareil de mélange de gaz suivant la revendication 1, dans lequel un moyen collecteur de poussière (22) est inclus dans ladite tuyauterie d'alimentation en oxygène entre ladite vanne de régulation de débit et lesdits moyens de régulation de débit.

3. Appareil de mélange de gaz suivant la revendication 1, dans lequel lesdits moyens pour introduire du gaz inerte dans ledit mélangeur (30) incluent une source de gaz inerte (20) connectée à une tuyauterie ou conduite d'alimentation en gaz inerte (18), une vanne de régulation de débit (96) afin d'initier ou de couper un débit de gaz inerte dans ladite tuyauterie de gaz inerte (18), un réservoir tampon (102) entre ladite vanne de régulation de débit (96) et une tuyauterie ou conduite commune (90) conduisant audit mélangeur (30) connectée auxdites tuyauteries d'oxygène et de gaz inerte (14, 18) en amont dudit mélangeur (30), et des moyens de régulation de débit (110, 120) entre ledit réservoir tampon (102) et ladite tuyauterie commune (90) avec un clapet antiretour (122) entre lesdits moyens de régulation de débit (110, 120) et ladite tuyauterie commune (90).

4. Appareil de mélange de gaz suivant la revendication 1, dans lequel ledit mélangeur (30) est une chambre cylindrique (130) connectée à ladite tuyauterie d'alimentation en gaz naturel (10) en aval dudit clapet antiretour (44), avec un tube (132) ayant une première extrémité ou extrémité d'alimentation connectée à ladite conduite d'alimentation en oxygène (14) en aval dudit clapet antiretour (92), et une deuxième extrémité fermée (134) avec ledit tube ayant une pluralité de perforations (136) à travers une partie de sa longueur, lesdites perforations (136) étant proches de ladite extrémité fermée (134) dudit tube (132), ledit tube (132) étant inséré dans ladite chambre cylindrique (130) avec l'axe de rotation dudit tube disposé perpendiculairement à l'axe de rotation dudit cylindre, et ledit tube (132) étant en communication étanche au fluide avec ladite chambre cylindrique (130), lesdites perforations (136) dans ledit tube (132) étant entièrement à l'intérieur de ladite chambre cylindrique (130).

5. Appareil de mélange de gaz suivant la revendication 4, dans lequel le rapport du diamètre de la chambre cylindrique (130) sur sa longueur est égal à 0,4 - 0,7.

6. Appareil de mélange de gaz suivant la revendication 4, dans lequel le diamètre du tube perforé (132) est égal à 0,15 à 0,5 fois le diamètre de la chambre cylindrique du mélangeur.

7. Appareil de mélange de gaz suivant la revendication 4, dans lequel la surface totale des perforations (136) dans le tube perforé (132) est dans la plage de 0,3 à 0,6 fois la section d'écoulement totale du tube (136).

8. Appareil de mélange de gaz suivant la revendication 4, dans lequel le diamètre de chaque trou (136) dans le tube perforé (132) est dans la plage de 0,03 à 0,07 fois le diamètre du tube.

9. Appareil de mélange de gaz suivant la revendication 1 incluant des moyens de (34, 36) pour purger ladite conduite de gaz naturel (10) en amont desdits moyens de régulation de débit (40, 42).

10. Appareil de mélange de gaz suivant la revendication 4 incluant des moyens (76, 78) de purger ladite conduite d'oxygène (14) entre un collecteur de poussière (72) placé en aval de ladite vanne de régulation de débit (70) et lesdits moyens de régulation de débit (82, 84, 86).

11. Appareil de mélange de gaz suivant la revendication 1, dans lequel lesdits moyens pour introduire un gaz inerte dans ladite conduite d'alimentation en oxygène (14) incluent une source de gaz inerte (20) connectée à ladite conduite d'alimentation en oxygène (14) via une tuyauterie ou conduite de gaz inerte (18), ladite tuyauterie (18) ayant en amont de la conduite commune et d'alimentation en gaz inerte (90) une vanne de. régulation de débit (96) afin d'initier, de réguler et de couper un débit de gaz inerte vers ladite conduite d'alimentation en oxygène, un réservoir tampon (102) en aval de ladite vanne de régulation (96) entre un premier clapet antiretour (100) et des moyens de régulation de débit (108), une deuxième vanne de régulation (120) entre ladite vanne de régulation (96) et ladite conduite commune d'oxygène et de gaz inerte (90), et un deuxième clapet antiretour (122) entre ladite deuxième vanne de régulation (120) et ladite conduite commune d'oxygène et de gaz inerte (90).

12. Appareil de mélange de gaz suivant la revendication 9 incluant un premier moyen (104, 106) de purger ledit réservoir tampon (102) et un deuxième moyen de purger ladite conduite de gaz inerte (18) entre ladite deuxième vanne de régulation (120) et ledit deuxième clapet antiretour (122).
